# EUROPEAN PATENT APPLICATION

(11) **EP 4 414 223 A1**
(43) Date of publication of application: **14.08.2024**
(21) Application number: 22878357.7
(22) Date of filing: 26.09.2022
(51) Int. Cl.: B60S 1/62, B60S 1/56

(54) **CLEANER**

(30) Priority: 08.10.2021 JP 2021166306
(71) Applicant: KOITO MANUFACTURING CO., LTD., Minato-ku, Tokyo, 108-8711 (JP)
(72) Inventor: KANAZAWA Hironobu, Shizuoka-shi, Shizuoka 424-8764 (JP); MIURA Riichiro, Shizuoka-shi, Shizuoka 424-8764 (JP)
(74) Representative: Cabinet Beau de Loménie
(86) International application number: PCT/JP2022/035701
(87) International publication number: WO 2023/058486

(57) **Abstract**

A cleaner (1) that cleans a to-be-cleaned object (C) using cleaning fluid comprises a cylindrical cylinder (2) to which cleaning fluid is supplied from the outside, a cylindrical piston (3) that is accommodated within the cylinder (2) and telescopically attached to the cylinder (2), and a nozzle (4) having an injection port (42) for injecting cleaning fluid supplied from the cylinder (2) to the piston (3). The nozzle (4) is configured as a component separate from the piston (3) and is detachably attached to the distal end of the piston (3).

## Description

### TECHNICAL FIELD

The present invention relates to a cleaner.

### BACKGROUND ART

A headlamp cleaner for a vehicle is known in Patent Literature 1 and the like.

### CITATION LIST

### PATENT LITERATURE

Patent Literature 1: JP2016-187990A

### SUMMARY OF INVENTION

### TECHNICAL PROBLEM

In recent years, development of vehicles capable of being autonomously driven has been attempted. In order to realize autonomous driving, for example, it is required to maintain good sensitivity of various sensors such as LiDAR. There is a demand for a sensor cleaner for cleaning an on-vehicle sensor to remove foreign matter adhering to the on-vehicle sensor. As the sensor cleaner, for example, there is a sensor cleaner in which a nozzle that is attached to a distal end of the sensor cleaner and ejects a cleaning medium is configured as a pop-up type that can freely project and retract.

In order to efficiently clean the on-vehicle camera by the sensor cleaner including such a pop-up nozzle, it is necessary to dispose the nozzle in a pop-up state at an appropriate position and orientation with respect to the on-vehicle sensor. However, there is a restriction on an area where a component of the sensor cleaner such as a nozzle can be disposed, and it is assumed that the component cannot be disposed in an appropriate position and orientation.

Accordingly, an object of the present invention is to provide a highly versatile cleaner that can cope with an object to be cleaned having different shapes and arrangement.

### SOLUTION TO PROBLEM

In order to achieve the above object, a cleaner according to one aspect of the present invention is a cleaner for cleaning an object to be cleaned with a cleaning fluid, the cleaner including:
a cylindrical cylinder configured to allow the cleaning fluid to be supplied from an outside;
a cylindrical piston accommodated in the cylinder and extendably and contractibly attached to the cylinder; and
a nozzle having an ejection port for ejecting the cleaning fluid supplied from the cylinder to the piston, in which
the nozzle is configured as a component separate from the piston, and is detachably attached to a distal end of the piston.

### ADVANTAGEOUS EFFECTS OF INVENTION

According to the present invention, it is possible to provide the highly versatile cleaner that can cope with an object to be cleaned having different shapes and arrangement.

### BRIEF DESCRIPTION OF DRAWINGS

FIG. 1 is a view illustrating a configuration of a cleaner that ejects a cleaning fluid to a camera that is an object to be cleaned.
FIG. 2 is a view illustrating a state in which a nozzle of the cleaner in FIG. 1 is extended.
FIG. 3 is a cross-sectional view illustrating the cleaner of FIG. 1.
FIG. 4 is a cross-sectional view illustrating a state in which the nozzle of the cleaner in FIG. 3 is extended.

### DESCRIPTION OF EMBODIMENTS

Hereinafter, an embodiment of the present invention (hereinafter referred to as the present embodiment) will be described with reference to the drawings. Members having the same reference numerals as those already described in the description of the embodiment will not be described for convenience of description. Further, for convenience of description, dimensions of each member illustrated in the drawings may be different from actual dimensions of each member.

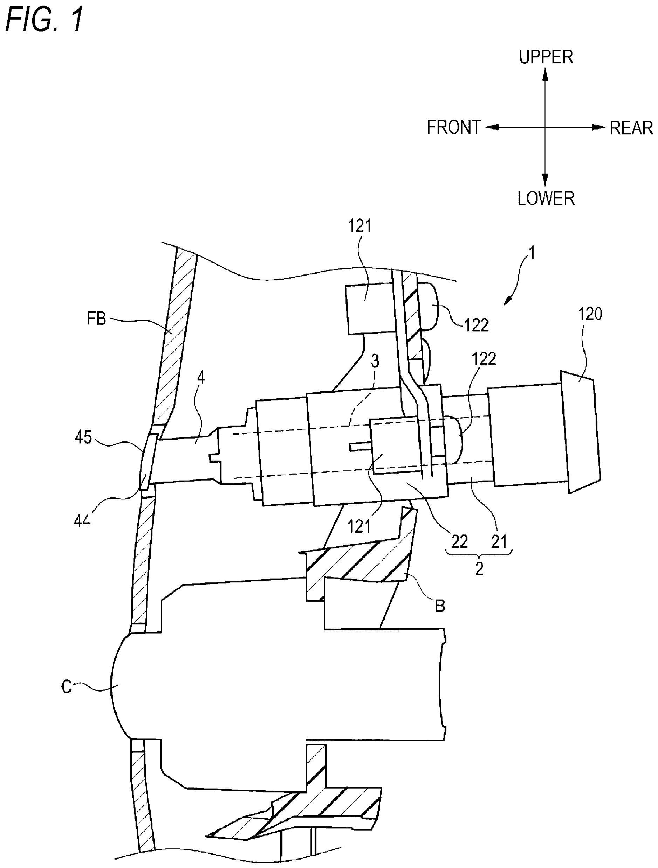

FIG. 1 is a view illustrating a configuration of a cleaner 1 according to the present embodiment together with a camera C that is an object to be cleaned. The cleaner 1 is a cleaner that cleans an object to be cleaned by ejecting a cleaning fluid (for example, water, detergent, or the like) onto the object to be cleaned. Examples of the object to be cleaned include a sensor attached to a vehicle and lamps. The sensor includes a camera, a radar, a light detection and ranging (LiDAR), and the like. The lamps include a headlamp, a rear combination lamp, a position lamp, a turn signal lamp, and the like. Hereinafter, in the present embodiment, the camera C attached to the vehicle will be described as an example of the object to be cleaned.

In the description of the present embodiment, for convenience of description, "front", "rear", "upper", and "lower" will be appropriately referred to. These directions are each a relative direction set for the vehicle to which the camera C is attached. The cleaner 1 in FIG. 1 is a cleaner for cleaning the camera C attached to, for example, a front portion of the vehicle.

As illustrated in FIG. 1, the cleaner 1 includes a cylinder 2, a piston 3, and a nozzle 4.

A cleaning fluid is supplied to the cylinder 2 from the outside. The cylinder 2 is connected to a tank (not illustrated) via a pump (not illustrated). The pump sucks the cleaning fluid stored in the tank and transfers the cleaning fluid to the cylinder 2. The tank is connected to a rear end portion 120 of the cylinder 2 via a hose (not illustrated) or the like.

The cylinder 2 includes a cylinder main body 21 and a cap 22. The cylinder main body 21 and the cap 22 are each formed in a cylindrical shape. The cylinder main body 21 is combined with the cap 22 in such a manner that a distal end portion (front side end portion in the illustrated example) of the cylinder main body 21 is accommodated in the cap 22. The cylinder 2 in a state in which the cylinder main body 21 and the cap 22 are combined is formed in a substantially cylindrical shape as a whole.

An attachment portion 121 for attaching the cleaner 1 to a component of the vehicle is provided on an outer peripheral portion of the cap 22. The cleaner 1 is fixed to the component of the vehicle via the attachment portion 121 of the cap 22 by, for example, screws 122. The cleaner 1 is attached to a bracket B via the attachment portion 121 together with, for example, the camera C that is the object to be cleaned. Accordingly, the cleaner 1 is disposed in parallel with the camera C. In the illustrated example, the cleaner 1 is disposed in parallel above the camera C.

The piston 3 is provided so as to be accommodated in the cylinder main body 21. The piston 3 is formed in a cylindrical shape, and is configured such that the cleaning fluid supplied to the cylinder 2 flows through the piston 3. The piston 3 is provided so as to be movable in a longitudinal direction of the cylinder main body 21 (front-rear direction in FIG. 1) in the cylinder main body 21. The piston 3 is extendable and contractible in the longitudinal direction of the cylinder main body 21 with respect to the cylinder main body 21.

The nozzle 4 is attached to a distal end portion (in the illustrated example, a front side end portion) of the piston 3. The nozzle 4 is formed in a cylindrical shape, and is configured to eject the cleaning fluid flowing in the piston 3 toward the camera C. The nozzle 4 is configured to move in the longitudinal direction of the cylinder main body 21 (the front-rear direction in FIG. 1) with respect to the cylinder main body 21 together with the piston 3 in accordance with the extension and contraction of the piston 3. The cleaner 1 illustrated in FIG. 1 is in a state in which the piston 3 is contracted with respect to the cylinder main body 21. In this state, the cleaning fluid is not ejected from the nozzle 4.

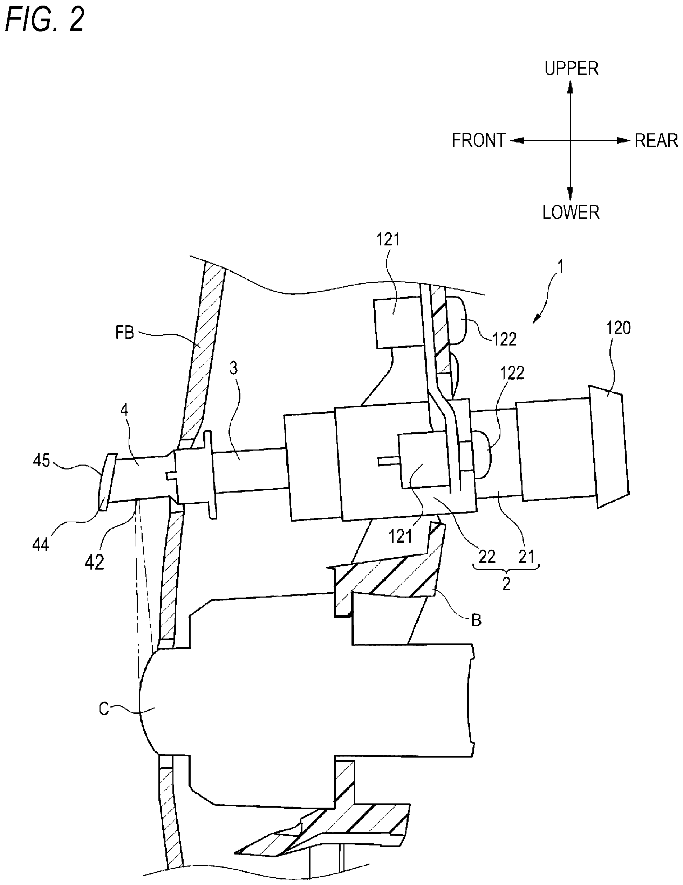

FIG. 2 is a view illustrating a state in which the piston 3 is extended with respect to the cylinder main body 21. As illustrated in FIG. 2, as the piston 3 extends, the nozzle 4 attached to the distal end portion of the piston 3 moves forward with respect to the cylinder main body 21 together with the piston 3. In this state, the cleaning fluid is ejected from an ejection port 42 of the nozzle 4 toward the camera C.

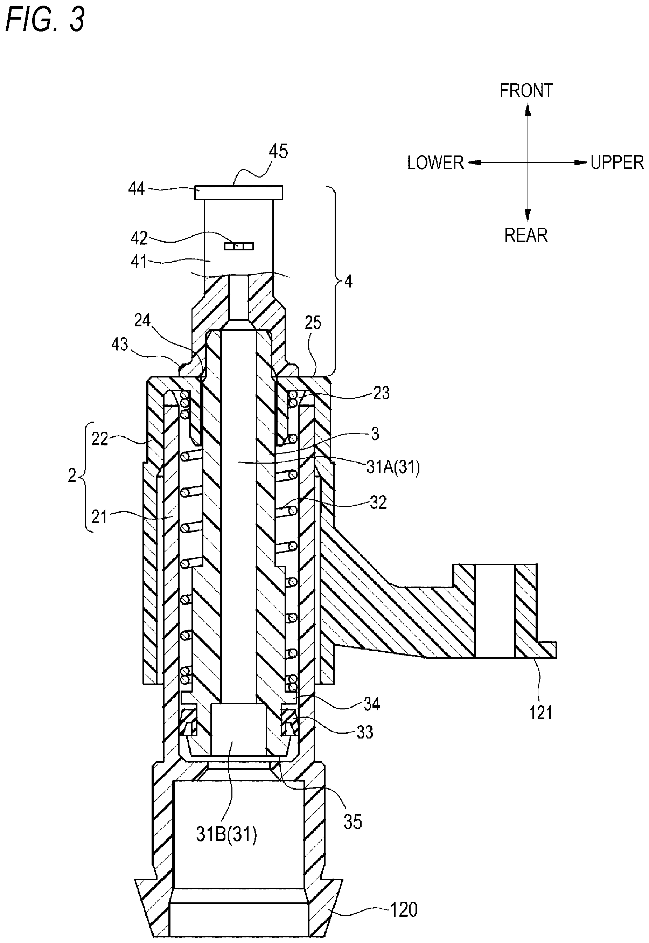

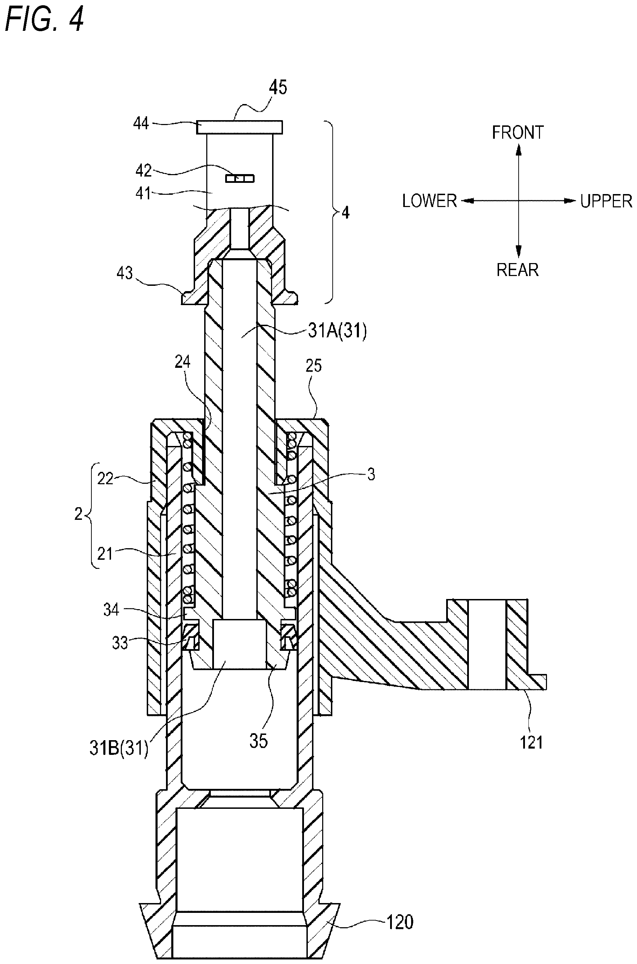

FIGS. 3 and 4 are cross-sectional views illustrating a specific configuration of the cleaner 1. The cleaner 1 illustrated in FIG. 3 is in a state in which the piston 3 is contracted with respect to the cylinder main body 21 as in FIG. 1. The cleaner 1 illustrated in FIG. 4 is in a state in which the piston 3 is extended with respect to the cylinder main body 21, similarly to FIG. 2.

As illustrated in FIGS. 3 and 4, the piston 3 is accommodated in the cylinder main body 21, and the cap 22 is assembled to the cylinder main body 21 so as to cover an opening 23 on a front side of the cylinder main body 21. The nozzle 4 is attached to the distal end portion of the piston 3.

A flow path 31 through which the cleaning fluid flows is formed in the piston 3 so as to pass through the piston 3. The flow path 31 includes a first flow path 31A and a second flow path 31B having a larger diameter than the first flow path 31A. The second flow path 31B is formed at a rear end of the first flow path 31A. The piston 3 is accommodated in a central portion of the cylinder main body 21. A gap is formed between an outer periphery of the piston 3 accommodated in the cylinder main body 21 and an inner peripheral surface of the cylinder main body 21, and a front side of the gap is a part of the opening 23 of the cylinder main body 21.

A through hole 24 is formed in a front portion of the cap 22. A diameter of the through hole 24 is slightly larger than a diameter of the piston 3. The diameter of the through hole 24 is smaller than a diameter of the opening 23 of the cylinder main body 21. In a state in which the piston 3 is inserted into the through hole 24 of the cap 22 while the piston 3 is accommodated in the cylinder main body 21, the cap 22 covers the opening 23 on the front side of the cylinder main body 21 by attaching the cap 22 to a distal end portion of the cylinder main body 21.

The piston 3 moves in the cylinder main body 21 in the longitudinal direction of the cylinder main body 21 in a state of being inserted through the through hole 24 of the cap 22. The piston 3 is urged by a spring 32 in a direction in which the piston 3 is accommodated in the cylinder main body 21, that is, toward a rear direction of the cylinder main body 21. The spring 32 is disposed in a gap between an outer peripheral surface of the piston 3 and an inner peripheral surface of the cylinder main body 21.

In a non-operating state of the cleaner 1 which is not ejecting the cleaning fluid, the piston 3 receives the urging force of the spring 32 and is in a state of being contracted with respect to the cylinder main body 21 as illustrated in FIG. 3. In contrast, in an operating state in which the cleaning fluid is ejected, the cleaning fluid supplied from the rear end portion 120 of the cylinder 2 presses a rear end surface 35 of the piston 3 and a step between the second flow path 31B and the first flow path 31A. Accordingly, the piston 3 moves in a direction protruding from the cylinder main body 21 to the outside, that is, toward a front direction of the cylinder main body 21 against an urging force of the spring 32. Therefore, the piston 3 is extended with respect to the cylinder main body 21 as illustrated in FIG. 4. When the ejection of the cleaning fluid from the nozzle 4 is stopped, that is, when the supply of the cleaning fluid to the inside of the cylinder 2 is stopped, the pressing of the cleaning fluid against the piston 3 is stopped, and thus the piston 3 returns to a contracted state with respect to the cylinder main body 21 by the urging of the spring 32.

A seal member 33 for preventing the cleaning fluid from entering an area where the spring 32 in the cylinder main body 21 is disposed is attached to an end portion on the rear side of the piston 3. A protrusion portion 34 for fixing an attachment position of the seal member 33 is provided on the outer peripheral surface of the piston 3 on the end portion on the rear side of the piston 3. A diameter of the protrusion portion 34 of the piston 3 is slightly smaller than an inner diameter of the cylinder main body 21. The diameter of the protrusion portion 34 of the piston 3 is larger than the diameter of the through hole 24 of the cap 22.

The nozzle 4 attached to the distal end portion of the piston 3 is configured as a component separate from the piston 3. The nozzle 4 is detachably attached to the piston 3. The nozzle 4 has a cylindrical portion 41 formed in a cylindrical shape, and an ejection port 42 for ejecting the cleaning fluid. A rear flange portion 43 is provided at a rear end portion of the cylindrical portion 41. A front flange portion 44 is provided at a front end portion of the cylindrical portion 41.

A diameter of the cylindrical portion 41 is smaller than the diameter of the cylinder main body 21. The diameter of the cylindrical portion 41 is larger than the diameter of the piston 3. The nozzle 4 is attached to the piston 3 by fitting the distal end portion of the piston 3 into an opening on a rear side of the cylindrical portion 41.

The ejection port 42 is formed in a side wall of the cylindrical portion 41. As illustrated in FIG. 2, the ejection port 42 ejects the cleaning fluid, which is supplied from the cylinder main body 21 to the piston 3 and further supplied from the piston 3 into the cylindrical portion 41 of the nozzle 4, toward the camera C. The position, orientation, a shape, and the like of the ejection port 42 may be different depending on the type of the nozzle 4 attached to the piston 3. For example, according to the shape, the position, and the like of the camera C that is the object to be cleaned, another nozzle that is different from the nozzle 4 according to the present example in at least one of the position, the orientation, the shape, and the like of the ejection port 42 may be attached to the piston 3.

The rear flange portion 43 is provided closer to the piston 3 than the ejection port 42 formed in the cylindrical portion 41. The rear flange portion 43 is provided at the rear end portion of the cylindrical portion 41 so as to protrude from the cylindrical portion 41 toward an outer periphery. The rear flange portion 43 is configured to abut on a front surface 25 of the cap 22 in a state in which the piston 3 is contracted with respect to the cylinder main body 21. The diameter of the rear flange portion 43 of the nozzle 4 is larger than the diameter of the through hole 24 of the cap 22 through which the piston 3 is inserted. Accordingly, the rear flange portion 43 is configured to close the through hole 24 of the cap 22 in the state in which the piston 3 is contracted with respect to the cylinder 2.

The front flange portion 44 is provided at the front end portion of the cylindrical portion 41 so as to protrude from the cylindrical portion 41 toward the outer periphery. The diameter of the front flange portion 44 is larger than the diameter of the cylindrical portion 41. The front flange portion 44 is provided so as to close the opening on the front side of the cylindrical portion 41. The front flange portion 44 is, for example, a circular plate-shaped member.

The front flange portion 44 functions as a design portion having a shape adapted to an exterior component of a vehicle on which the cleaner 1 is mounted. The exterior component of the vehicle is, for example, a front bumper or a front grille. When the cleaner 1 is mounted on a rear portion of the vehicle, the exterior component may be a rear bumper or the like. A distal end design surface 45, which is a front surface of the front flange portion 44, is preferably colored or patterned (for example, the same as exterior component) applied to the exterior component of the vehicle to which the cleaner 1 is attached.

As illustrated in FIG. 1, in the state in which the piston 3 is contracted with respect to the cylinder main body 21, the front flange portion 44 of the nozzle 4 is in a state such that the distal end design surface 45, which is the front surface of the front flange portion 44, is flush with a surface of a front bumper FB of the vehicle. As described above, since the distal end design surface 45 of the front flange portion 44, in particular, the distal end design surface 45 functions as a design portion adapted to the shape of the front bumper FB, when the distal end design surface 45 is flush with the surface of the front bumper FB of the vehicle, the presence of the nozzle 4 can be made inconspicuous when viewed from the outside of the vehicle.

As described above, the cleaner 1 according to the present embodiment is a cleaner for cleaning the camera C (an example of an object to be cleaned) with the cleaning fluid, and includes the cylindrical cylinder 2 configured to allow the cleaning fluid to be supplied from the outside, the cylindrical piston 3 accommodated in the cylinder 2 and extendably and contractibly attached to the cylinder 2, and the nozzle 4 having the ejection port 42 for ejecting the cleaning fluid supplied from the cylinder 2 to the piston 3. Further, the nozzle 4 is configured as a component separate from the piston 3, and is detachably attached to the distal end of the piston 3. According to this configuration, since the nozzle 4 is configured as a component separate from the piston 3, the nozzle 4 having an appropriate shape can be replaced with the piston 3 and used according to the shape and size of the object to be cleaned and a positional relationship between the object to be cleaned and the nozzle 4. Therefore, it is possible to provide the highly versatile cleaner 1 that can cope with an object to be cleaned having different shapes and arrangement, which is not limited to the camera C having the configuration illustrated in this example.

In the present embodiment, the nozzle 4 includes the cylindrical portion 41 in which the ejection port 42 is formed, and the diameter of the cylindrical portion 41 is smaller than the diameter of the cylinder 2. In this way, by using the nozzle 4 having a diameter smaller than the diameter of the cylinder 2, it is possible to reduce the size of the cleaner 1 (in particular, the nozzle 4), and it is possible to improve a degree of freedom in the arrangement and designability of the cleaner 1.

In the present embodiment, the nozzle 4 is replaceable with another nozzle 4 that is different in at least one of the shape, the position, and the orientation of the ejection port 42 according to at least one of the shape and position of the object to be cleaned. According to this configuration, since it is possible to appropriately change an ejection direction of the cleaning fluid from the nozzle 4 by using different nozzles 4 according to the object to be cleaned, it is possible to further improve versatility of the cleaner 1.

In the present embodiment, the nozzle 4 has the cylindrical portion 41 in which the ejection port 42 is formed, and the distal end design surface 45 of the front flange portion 44 provided at the distal end of the cylindrical portion 41 functions as a design portion having a shape adapted to an exterior component of an article (in this example, for example, a vehicle) on which the cleaner 1 is mounted. In this way, since the distal end design surface 45 at the distal end of the nozzle 4 has a shape adapted to the exterior component of the vehicle on which the cleaner 1 is mounted, the designability can be improved. Further, since the nozzle 4 is configured as a component separate from the piston 3, it is possible to further improve the versatility and designability of the cleaner 1 by selecting the nozzle 4 having a different shape, color, and pattern of the distal end design surface 45 and attaching the nozzle 4 to the piston 3 according to exterior (appearance) of the object to be cleaned.

In the present embodiment, the diameter of the front flange portion 44 having the distal end design surface 45 is larger than the diameter of the cylindrical portion 41. In the state in which the piston 3 is contracted with respect to the cylinder 2, the distal end design surface 45 of the front flange portion 44 is flush with the exterior component of the vehicle. As described above, in a state in which the nozzle 4 is not popped up (the non-operating state of the cleaner), the distal end design surface 45 of the front flange portion 44 having a larger diameter than the cylindrical portion 41 is flush with the exterior component, so that the presence of the nozzle 4 can be made inconspicuous, and the designability of the cleaner 1 can be further improved.

In the present embodiment, the nozzle 4 includes the cylindrical portion 41 in which the ejection port 42 is formed, and the rear flange portion 43 protruding from the cylindrical portion 41 toward the outer periphery at a position closer to the piston 3 side than the ejection port 42 of the cylindrical portion 41. In the state in which the piston 3 is contracted with respect to the cylinder 2, the rear flange portion 43 closes the through hole 24 formed in the cylinder 2 and through which the piston 3 passes. According to this configuration, it is possible to prevent dust from entering the inside of the cylinder 2 from the through hole 24 by the rear flange portion 43 formed in the nozzle 4 in the non-operating state of the cleaner 1. Therefore, a seal member provided between the opening 23 of the cylinder 2 and the piston 3, which is required in the related art, can be eliminated.

In the present embodiment, the cylinder 2 includes the cylinder main body 21 in which the piston 3 is accommodated, and the cap 22 attached to the distal end of the cylinder main body 21 and covering a part of the opening 23 of the cylinder main body 21. The diameter of the rear flange portion 43 of the nozzle 4 is larger than the diameter of the through hole 24 formed in the cap 22. According to this configuration, by providing the rear flange portion 43 having a larger diameter than the through hole 24 in the nozzle 4, it is possible to reliably prevent dust from entering the inside of the cylinder main body 21 from the through hole 24. In addition, when the cleaner 1 is assembled, it is necessary to cover the front surface of the cylinder main body 21 with the cap 22 after the piston 3 is inserted into the cylinder main body 21 in order to prevent the entire piston 3 from coming off from an opening portion on the front surface (distal end) side of the cylinder main body 21. Therefore, for example, when the nozzle 4 having the rear flange portion 43 having a larger diameter than the through hole 24 of the cap 22 is integrated with the piston 3, the cap 22 cannot be assembled after the piston 3 is inserted into the cylinder 2. In contrast, according to the present configuration, the piston 3 and the nozzle 4 having the rear flange portion 43 are separate components. Therefore, even when the rear flange portion 43 is provided in order to prevent dust from entering the cylinder 2, the assembling workability of the components (the piston 3, the cylinder main body 21, the cap 22, the spring 32, and the like) of the cleaner 1 is not impaired.

Although the embodiment of the present invention has been described above, it goes without saying that the technical scope of the present invention should not be limited to the description of the embodiment. The present embodiment is merely an example, and it is understood by those skilled in the art that various modifications of the embodiment are possible within the scope of the invention described in the claims. The technical scope of the present invention should be determined based on the scope of the invention described in the claims and its equivalents.

The present application is based on a Japanese Patent Application No. 2021-166306 filed on October 8, 2021, and the contents thereof are incorporated herein by reference.

## Claims

1. A cleaner for cleaning an object to be cleaned with a cleaning fluid, the cleaner comprising:
a cylindrical cylinder configured to allow the cleaning fluid to be supplied from an outside;
a cylindrical piston accommodated in the cylinder and extendably and contractibly attached to the cylinder; and
a nozzle having an ejection port for ejecting the cleaning fluid supplied from the cylinder to the piston, wherein
the nozzle is configured as a component separate from the piston, and is detachably attached to a distal end of the piston.

2. The cleaner according to claim 1, wherein
the nozzle includes a cylindrical portion in which the ejection port is formed, and
a diameter of the cylindrical portion is smaller than a diameter of the cylinder.

3. The cleaner according to claim 1 or 2, wherein
the nozzle is replaceable with another nozzle that is different in at least one of a shape, a position, and orientation of the ejection port according to at least one of a shape and a position of the object to be cleaned.

4. The cleaner according to any one of claims 1 to 3, wherein
the nozzle includes a cylindrical portion in which the ejection port is formed, and
a distal end of the cylindrical portion functions as a design portion having a shape adapted to an exterior component of an article on which the cleaner is mounted.

5. The cleaner according to claim 4, wherein
the design portion has a diameter larger than a diameter of the cylindrical portion, and is flush with the exterior component in a state in which the piston is contracted with respect to the cylinder.

6. The cleaner according to any one of claims 1 to 5, wherein
the nozzle includes a cylindrical portion in which the ejection port is formed, and a flange portion protruding from the cylindrical portion toward an outer periphery at a position closer to a piston side than the ejection port of the cylindrical portion, and
the flange portion closes a through hole formed in the cylinder and through which the piston passes in the state in which the piston is contracted with respect to the cylinder.

7. The cleaner according to claim 6, wherein
the cylinder includes a cylinder main body in which the piston is accommodated, and a cap attached to a distal end of the cylinder main body and covering a part of an opening of the cylinder main body, and
a diameter of the flange portion is larger than a diameter of the through hole formed in the cap.
